# EUROPÄISCHE PATENTSCHRIFT

(11) **EP 1 537 402 B1**
(45) Veröffentlichungstag und Bekanntmachung des Hinweises auf die Patenterteilung: **20.09.2006**
(21) Anmeldenummer: 03795020.1
(22) Anmeldetag: 16.07.2003
(51) Int. Cl.: G01N 1/31

(54) **VORRICHTUNG UND VERFAHREN ZUR DURCHFÜHRUNG VON IMMUNOLOGISCHEN MARKIERUNGSTECHNIKEN FÜR GEWEBEDÜNNSCHNITTE**
DEVICE AND METHOD FOR CARRYING OUT IMMUNOLOGICAL MARKING TECHNIQUES FOR THIN-SECTIONED TISSUE
PROCEDE ET DISPOSITIF POUR PRATIQUER DES TECHNIQUES DE MARQUAGE IMMUNOLOGIQUE SUR DES COUPES TISSULAIRES

(30) Priorität: 29.08.2002 DE 10239739
(43) Veröffentlichungstag der Anmeldung: 08.06.2005
(73) Patentinhaber: Leica Mikrosysteme GmbH, 1170 Wien (AT)
(72) Erfinder: POSTHUMA, George, NL-3941 ZN Doorn (NL)
(74) Vertreter: Reichert, Werner Franz
(86) Internationale Anmeldenummer: PCT/EP2003/050309
(87) Internationale Veröffentlichungsnummer: WO 2004/025273

(56) Entgegenhaltungen:
- EP-A- 0 323 130
- WO-A-01/04634
- US-A- 3 350 220
- US-A- 3 976 028
- US-A- 4 731 335
- US-A1- 2002 114 733
- US-B1- 6 330 106

## Beschreibung

Die vorliegende Erfindung betrifft eine Vorrichtung zur Behandlung von Gewebedünnschnitten auf einer Trägerplatte mit mindestens einer Behandlungsflüssigkeit.

Ferner betrifft die vorliegende Erfindung ein Verfahren zur Behandlung von Gewebedünnschnitten auf einer Trägerplatte mit mindestens einer Behandlungsflüssigkeit.

Um die Struktur von biologischen Proben, wie Geweben oder Zellen im Elektronenmikroskop untersuchen zu können, werden Ultradünnschnitte von nur wenigen nm Größe angefertigt, die auf Objektträgernetze aus Metall (im folgenden als Metallnetzchen bezeichnet), bevorzugt aus dem Metall Nickel aufgebracht werden. Für die elektronenmikroskopische Untersuchung werden die Schnitte kontrastiert oder durch spezielle oder cytochemische Verfahren einzelne Bestandteile der Probe markiert. Häufig beruhen diese cytochemischen Verfahren auf dem Prinzip der Ligandenpaarbildung, wobei ein erster Ligand in der biologischen Probe enthalten sein kann und der zweite Ligand dann, wenn er mit dieser Probe in Kontakt kommt, als Bindungspartner an den ersten Ligand bindet. Beispiele für Ligandenpaare auf biologischer Basis stellen Antigen/Antikörper-Bindungspaare, Enzym/Substrat- Bindungspaare, Lektine/Zucker, Hormon/Rezeptor-Systeme, DNA/DNA- und DNA/RNA-Paare dar.

Im Stand der Technik sind zahlreiche Verfahren bekannt, bei denen das Antigen/Antikörper-Bindungspaar beteiligt ist, sie werden unter dem Begriff der Immunhisto- und lmmuncytochemie zusammengefasst (im folgenden als immunologische Markierungstechniken bezeichnet). Das US-Patent 3,350,220 beschreibt eine Vorrichtung und ein Verfahren zur Präparation von histologischen Gewebeproben für die elektronenmikroskopische Analyse. Die Vorrichtung enthält eine Transportvorrichtung zum automatischen Transport einer oder mehrerer Gewebeproben in perforierten Körbchen. Die Transportvorrichtung kann vertikal bewegt werden, um das jeweilige Körbchen mit der Probe in die Vertiefung einer Trägerplatte abzusenken, um es in die darin enthaltene Flüssigkeiten einzutauchen, und anschliessend wieder anzuheben und zu der folgenden Vertiefung zu bewegen, in die das Körbchen eingetaucht werden soll. Die Trägerplatte enthält eine Vielzahl von Vertiefungen, die kreisförmig angeordnet sind, und deren Positionen mit denen der Proben-Körbchen der ebenfalls runden Transportvorrichtung fluchten. Das US-Patent 5,143,714 offenbart beispielsweise ein Verfahren, das ein Antigen aus einer flüssigen Probe in einer pelletierbaren Gelsubstanz adsorbiert. Das Gelpellet wird mit einer Diffusionsbarriere umgeben, als Block in eine ausgestanzte Gelmatrix integriert und im Folgenden wie eine Gewebeprobe immunologischen Markierungstechniken unterzogen. Die DE 38 78 167 T2 beschreibt die Verwendung von kolloidalen Goldteilchen zur Markierung von Liganden in der Immunogold Staining Technique. Ein stark verbessertes Verfahren, das die qualitative und quantitative Auswertung eines Antigens in einer Probe erlaubt, offenbart das US-Patent 5,079,172 mit einem Sandwich-Assay, indem der das Antigen bindende erster Antikörper mit einem Gold markierten zweiten Antikörper, der den ersten Antikörper bindet, markiert wird. Im elektronenmikroskopischen Auswerteverfahren kann anhand der Menge der Goldpartikel das Antigen der Probe qualitativ und quantitativ ermittelt werden.

Vielen Protokollen der Immunhisto- und Immuncytochemie zur immunologischen Markierung von Gewebedünnschnitten ist gemeinsam, dass sie meist aus 10 bis 20 einzelnen Verfahrensschritten bestehen. Zu einem Großteil bestehen die Verfahrenschritte aus Waschvorgängen der zu untersuchenden Probe mit Puffer- oder Markierungslösung.

Diese Waschvorgänge werden derzeit in einem aufwendigen Prozess manuell durchgeführt, wobei mit einer Pipette einzelne Tropfen der wässrigen Puffer- oder Markierungslösung auf eine hydrophobe Unterlage (z.B. Parafilm®, Parlodion®, Colloidion oder Formfan®) aufgebracht werden. Die Metallnetzchen mit den Gewebedünnschnitten werden nach unten einzeln darauf gelegt, um mit der Behandlungsflüssigkeit zu reagieren. Wegen des geringen Gewichts des Metallnetzchens und der Oberflächenspannung des Flüssigkeitstropfen, schwimmt das Metallnetzchen dabei auf der Tropfenoberfläche. Nach einer bestimmten Verweildauer für diesen Schritt (häufig 5-10 min) wird das Metallnetzchen mit einer Pinzette zum nächsten Tropfen weiter transportiert. Dieser Vorgang wird bis zur letzen Position des Standardprotokolls fortgeführt und bindet eine Arbeitskraft bis zu mehreren Stunden pro immunologischer Markierungsreaktion.

Es ist leicht ersichtlich, dass dieser manuelle Prozess kontinuierliche Aufmerksamkeit des Arbeitspersonals fordert und durch den großen Zeitaufwand hohe Arbeitskosten mit sich bringt. Die Zahl der gleichzeitig zu bearbeitenden Proben ist stark limitiert und Fehler seitens des Arbeitspersonals beim exakten Pipettieren und Positionieren der Flüssigkeitstropfen mit kleinsten Volumina nicht auszuschließen. Das manuelle Verfahren kann eine Verwechslung der Proben nach der langen Behandlungszeit während der immunologischen Markierung nicht ausschließen, dies könnte durch Verwendung eines Probenträgers mit Kennzeichnung in Form eines Chips oder Barcodes, wie es in dem Gebrauchsmuster DE 299 06 382 U1 dargestellt ist, verhindert werden.

Zusätzlich stellt die Verdunstung der Flüssigkeitstropfen bei länger dauernden Standardprotokollen ein großes Problem dar.

Zwar offenbart das Gebrauchsmuster DE 298 17 912 U1 eine Vorrichtung zum Waschen von mikroskopierbaren Präparaten auf Trägern nach immunocytochemischer Behandlung, allerdings handelt es sich hierbei um eine Waschbox in der eine größere Menge an Waschlösung mit einer gewissen Strömungsgeschwindigkeit über Präparat und Träger hindurchströmt. Für die Durchführung von immunologischen Markierungstechniken selber ist diese Vorrichtung nicht geeignet, da die verwendeten antikörperhaltigen Markierungslösungen sehr teuer sind und daher nur in möglichst geringen Volumina eingesetzt werden. Bisher ist kein Gerät und kein Verfahren bekannt, das den Vorgang der Durchführung von immunologischen Markierungstechniken für Gewebedünnschnitte zufriedenstellend automatisiert.

Der Erfindung liegt daher die Aufgabe zugrunde, eine geeignete Vorrichtung zur Behandlung von Gewebedünnschnitten bereitzustellen, die es erlaubt effektiv, annähernd automatisch und zeitsparend mehrere Gewebedünnschnitte in reproduzierbarer Qualität gleichzeitig zu bearbeiten.

Die Aufgabe wird erfindungsgemäß mit einer Vorrichtung gelöst, die die Merkmale des Anspruchs 1 umfasst.

Eine weitere Aufgabe der Erfindung ist es ein Verfahren zur Behandlung von Gewebedünnschnitten für die Durchführung von immunologischen Markierungstechniken bereitzustellen, das es erlaubt effektiv, annähernd automatisch und zeitsparend mehrere Gewebedünnschnitte in reproduzierbarer Qualität gleichzeitig zu bearbeiten.

Diese Aufgabe wird erfindungsgemäß mit einem Verfahren gelöst, das die Merkmale des Anspruchs 9 umfasst.

Die erfindungsgemäße Vorrichtung besteht im wesentlichen aus zwei Teilen, einer Trägerplatte, auf der Metallnetzchen platziert und mittels Magnet gehalten werden und einem Objektträger der Vertiefungen (sogenannte "wells") enthält, die mit mindestens einer Flüssigkeit (Behandlungsflüssigkeiten zur immunologischen Markierung oder Waschlösungen jeweils nach dem Stand der Technik) gefüllt werden können. Die Positionen der Vertiefungen entsprechen dabei in ihrer Anordnung gegenüberliegend den Positionen der Metallnetzchen auf der Trägerplatte. Beide Teile der Vorrichtung können in einer Anordnung in eine Transportvorrichtung mit steuerbarer Hebe- und Senkfunktion so eingelegt werden, dass die Trägerplatte mit den Metallnetzchen von oben wie ein Stempel mit den Flüssigkeitstropfen in den Vertiefungen des Objektträgers in Berührung kommt. Dieser Vorgang ermöglicht eine Automatisierung von immunologischen Markierungsverfahren für Gewebedünnschnitte für elektronenmikroskopische Untersuchung. Mehrere Objektträger können automatisch einer Behandlungsposition zugeordnet werden und auf einer einzelnen Trägerplatte können eine Vielzahl von Metallnetzchen angebracht sein, so dass sich die Anzahl der gleichzeitig zu bearbeitenden Proben deutlich erhöht. Die Vorrichtung zur Behandlung von Gewebedünnschnitten besitzt mindestens eine Trägerplatte, wobei die Gewebedünnschnitte mit mindestens einer Behandlungsflüssigkeit behandelt werden. Gegenüberliegend zu der Trägerplatte ist mindestens ein Objektträger in einer Behandlungsposition angeordnet. Mehrere der Objektträger sind in diese Behandlungsposition automatisch überführbar. Die Trägerplatte definiert eine Unterseite, an der markierte Positionen ausgezeichnet sind, an denen Metallnetzchen mit Gewebedünnschnitten positioniert sind. Ebenso definiert die trägerplatte eine Oberseite, in der mehrere Bohrungen ausgebildet sind, in denen jeweils ein Magnet steckt. Die Bohrungen sind derart angebracht, dass sie den markierten Positionen gegenüberliegen. Der Objektträger definiert eine Oberseite, die freie Vertiefungen enthält, die zur Aufnahme von Behandlungsflüssigkeit ausgebildet sind.

Die Erfindung wird im folgenden anhand der in den Figuren schematisch dargestellten Beispiele verdeutlicht. Dabei zeigen:
- Fig. 1:: eine perspektivische Ansicht einer Trägerplatte, die Metallnetzchen trägt;
- Fig. 2:: eine perspektivische Ansicht eines Objektträgers mit Vertiefungen, die mit mindestens einer Behandlungsflüssigkeit gefüllt werden können;
- Fig.3: eine Detailansicht der Trägerplatte und des Objektträgers im Querschnitt;
- Fig. 4:: eine Draufsicht einer Ausführungsform eines Objektträgers,
- Fig. 5: eine perspektivische Ansicht der Transportvorrichtung zum Aufbringen der Trägerplatte auf den Objektträger;
- Fig. 6: eine schematische Darstellung der Trägerplatte, die durch die Transportvorrichtung annähernd in Kontakt mit einem Objektträger ist;
- Fig. 7: eine schematische Darstellung der Kammer als Verdunstungsschutz der Flüssigkeitstropfen auf den Objektträgern; und
- Fig. 8: eine schematische Darstellung einer anderen Ausführungsform der Kammer als Verdunstungsschutz der Flüssigkeitstropfen auf den Objektträgern.

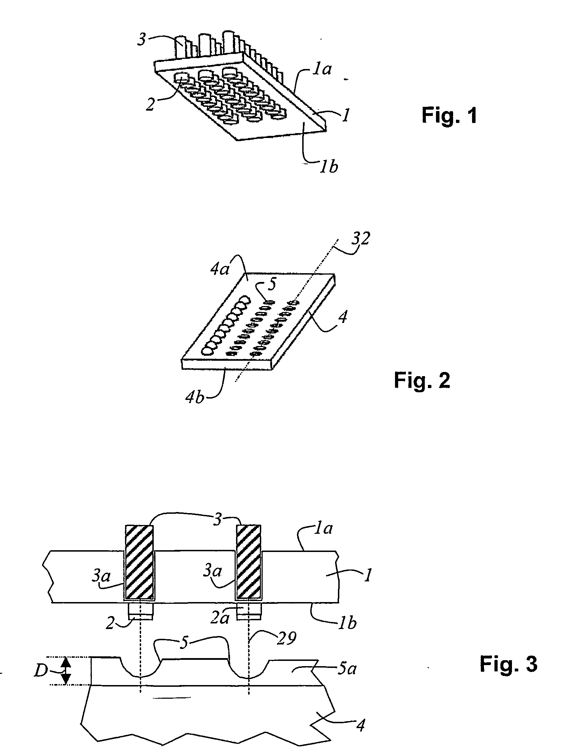

Fig. 1 zeigt eine erfindungsgemäße Trägerplatte 1, die eine Oberseite 1a und eine Unterseite 1b definiert. Auf der Unterseite 1b besitzt die Trägerplatte 1 markierte Positionen, an denen Metallnetzchen 2 mit Gewebedünnschnitten (hier nicht dargestellt) positioniert sind. Bevorzugterweise sind die Positionen der Metallnetzchen 2 auf der Trägerplatte 1 erhöht. Damit wird verhindert, dass beim Kontakt mit den Flüssigkeitstropfen Flüssigkeitsbrücken zwischen den einzelnen Metallnetzchen 2 entstehen. An der Oberseite 1a der Trägerplatte 1 befinden sich entgegengesetzt zu den Positionen der Metallnetzchen 2 Bohrungen 3a (siehe Fig. 3), in denen Magnete 3 z. B. Permanentmagnete stecken. Sie bewirken, dass die Metallnetzchen 2 auf der Unterseite 1b der Trägerplatte 1 durch magnetische Kraft auf ihrem Platz gehalten werden. Der Abstand zwischen Metallnetzchen 2 und Magnet 3 soll möglichst gering (Abstand < 2 mm) gehalten werden. Die Trägerplatte 1 besteht vorzugsweise aus formstabilem, nicht magnetischen Material, vorzugsweise aus Aluminium, Messing, faserverstärkte Kunststoffe und ist vorteilhafterweise auf der Unterseite 1b, die die Metallnetzchen 2 trägt, hydrophob beschichtet (z.B. mit einer Teflondruckbeschichtung). Es ist für einen Fachmann selbstverständlich, dass für Form der Trägerplatte 1, sowie die Anordnung der Metallnetzchen 2 auf der Trägerplatte 1 zahlreiche Ausführungsformen möglich sind. In der hier dargestellten Ausführungsform sind auf einer rechteckigen Platte mit den Maßen ca. 76 X 26mm (3 X 1 Inch; Objektträgergröße) beispielsweise 10 x 3 Metallnetzchen 2 untergebracht, die einen Durchmesser von 3 mm aufweisen. Entscheidend ist, dass die Positionen der Metallnetzchen 2 auf der Unterseite 1b der Trägerplatte 1 den Bohrungen für die Magnete 3 auf der Oberseite 1a der Trägerplatte 1 gegenüberliegen und auch den Positionen mindestens eines Flüssigkeitstropfens 6 auf der Oberseite 4a eines Objektträgers 4 (siehe Fig. 2) gegenüberliegen.

In einem weiteren Ausführungsbeispiel werden die Metallnetzchen 2 auf der Unterseite 1b der Trägerplatte 1 durch Elektromagnete (nicht dargestellt) gehalten.

Fig. 2 zeigt eine perspektivische Ansicht des erfindungsgemäßen Objektträgers 4, der eine Oberseite 4a und eine Unterseite 4b definiert. Der Objektträger 4 besitzt auf der Oberseite 4a mehrere Vertiefungen 5 (sogenannte "wells"), die in der gezeigten Ausführungsform in Reihe angeordnet und mit jeweils einem Flüssigkeitstropfen 6 gefüllt sind. Der Flüssigkeitstropfen 6 besteht aus einer Wasch- oder Behandlungslösung wie sie im Stand der Technik offenbart ist. Es ist vorgesehen, dass sich in den einzelnen Vertiefungen 5 auch unterschiedliche Flüssigkeiten befinden (z.B. eine Reihe von Vertiefungen 5 gefüllt mit Waschlösung, die nächste Reihe von Vertiefungen 5 gefüllt mit Markierungslösung). Der Objektträger 4 ist vorteilhafterweise transparent und besteht aus formstabilem Material. Vorzugsweise ist der Objektträger 4 aus Glas oder Kunststoff und ist auf der Oberseite 4a, die die Vertiefungen 5 trägt, und in den Vertiefungen 5 selber hydrophob beschichtet (z.B. mit einer Teflondruckbeschichtung 5a). Die Vertiefung 5 ist identisch mit der Dicke D (siehe Fig. 3) der Teflonbeschichtung 5a. Die Vertiefung 5 beträgt vorzugsweise etwa 50µm. Die Vertiefungen 5 tragen ein Flüssigkeitsvolumen, das bei Waschlösung etwa 50µl, bei Antikörpern und Goldlösungen etwa 5µl beträgt. Die Teflondruckbeschichtung ist für verschiedene Tropfengrößen gleich. Durch die hydrophobe Randschicht wölben sich die Flüssigkeitstropfen 6 mehr oder weniger nach oben. Um die Netzchen mit diesen Tropfen in Berührung zu bringen, ist es für den Ablauf unbedingt notwendig die Tropfengröße zu kennen, da die Tropfengröße eine unterschiedliche Position für die Absenkbewegung der Metallnetzchen 2 ergibt.

Die räumliche Beziehung des Objektträgers 4 und der Trägerplatte 1 zueinander sind in Fig. 3 als Teilansicht im Querschnitt dargestellt. Die Teilansicht des Querschnitts ist z.B. in Fig. 2 durch die gestrichelte Linie 32 definiert. In dem hier gezeigten Ausführungsbeispiel ist auf dem Objektträger 4 eine hydrophobe Beschichtung 5a aufgebracht, die eine Dicke D aufweist. In der Trägerplatte 1 sind Bohrungen 3a für Magnete 3 vorgesehen. Auf der Unterseite 1b der Trägerplatte 1 sind markierte Positionen 2a vorgesehen, von denen jeweils eine ein Metallnetzchen 2 trägt. Das Metallnetzchen 2 ist durch die den markierten Positionen 2a zugeordneten Magnete 3 gehaltert. Die gestrichelt-gepunktete Linie 29 in Fig. 3 verdeutlicht, dass die Trägerplatte 1 und der Objektträger 4 derart angeordnet sind, dass jeweils eine markierte Position 2a mit Metallnetzchen 2 einer Vertiefung 5 gegenüberliegt.

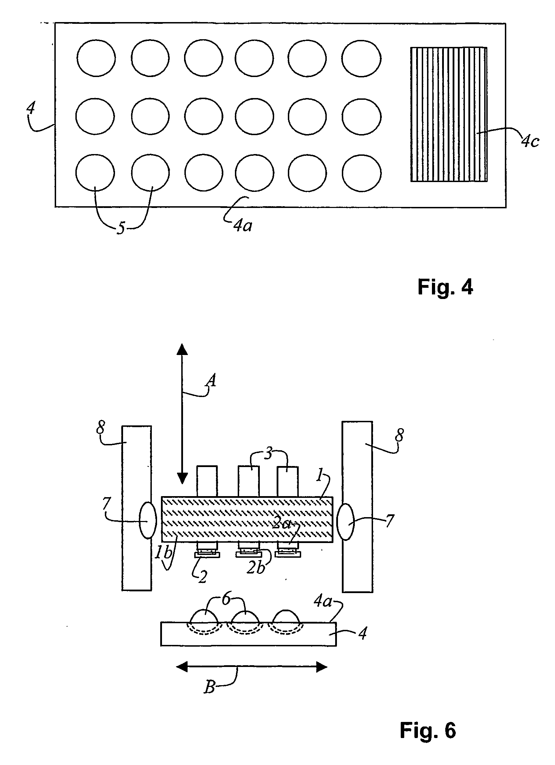

Fig. 4 zeigt den Objektträger 4 in der Draufsicht. Dabei ist eine weitere Ausführungsform des Objektträgers 4 dargestellt. Zur Kennzeichnung besitzt der Objektträger 4 vorteilhafterweise eine Kennzeichnung, wie es z.B. in dem Gebrauchsmuster DE 299 06 382 U1 dargestellt ist. Die Kennzeichnung 4c ist auf der Oberfläche 4a des Objektträgers 4 angebracht und kann in Form eines Barcodes oder eines Chips ausgestaltet sein. Dem Fachmann ist ersichtlich, dass es die für Größe und Form des Objektträgers 4, sowie die Anordnung der Vertiefungen 5 auf der Oberseite 4a des Objektträgers 4 zahlreiche Ausführungsmöglichkeiten gibt. Auf einer rechteckigen Fläche mit den Maßen 76 mm x 26 mm können beispielsweise 10 x 3 Vertiefungen 5 einer Größe von 2 mm bis 3 mm enthalten sein. Entscheidend ist, dass die Positionen der Flüssigkeitstropfen 6 auf der Oberseite 4a des Objektträgers 4 in ihrer Anordnung den Positionen der Metallnetzchen 2 auf der Unterseite 1a der Trägerplatte 1 gegenüberliegen (siehe Darstellung Fig. 3).

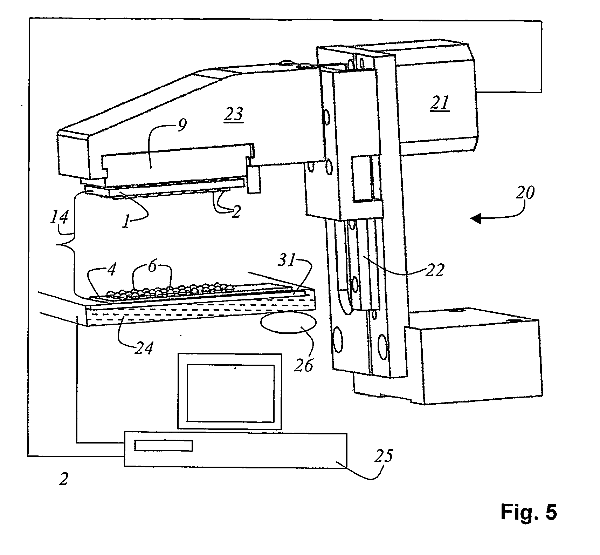

Fig. 5 zeigt die erfindungsgemäße Trägerplatte 1 in einer Transportvorrichtung 20 mit steuerbarer Hebe- und Senkfunktion. Die Transportvorrichtung 20 ist derart ausgestaltet, dass mehrere Objektträger 4 mit der Trägerplatte 1 nacheinander in Kontakt gebracht werden können. Die Transportvorrichtung 20 wird derart gesteuert, dass die Positionen der Vertiefungen 5 des Objektträgers 4 mit den darin befindlichen Flüssigkeitstropfen 6 exakt den Positionen der Metallnetzchen 2 auf der Unterseite 1b der Trägerplatte 1 gegenüberliegen. Dabei wird die Trägerplatte 1 mittels eines Motors 21 der Transportvorrichtung 20 von oben parallel und seitlich zentriert, bis die Positionen von Metallnetzchen 2 und der Flüssigkeitstropfen 6 gegenüberliegend übereinstimmen. Die Transportvorrichtung 20 nähert dann die Trägerplatte 1 an den Objektträger 4 an. Hierzu ist an der Transportvorrichtung 20 eine Schiene 22 vorgesehen, die die in einem Haltekopf 23 der Transportvorrichtung 20 über eine Halterung 9 eingespannte Trägerplatte 1, linear auf den Objektträger 4 absenkt. Die Objektträger 4 sind z.B. auf einer Fördereinrichtung 24 aufgelegt, die die Objektträger 4 in geeigneter Weise zu der Transportvorrichtung 20 bewegt. Die Transportvorrichtung 20 und die Fördereinrichtung 24 werden über eine Computereinheit 25 und entsprechendes Computerprogramm gesteuert und geregelt.

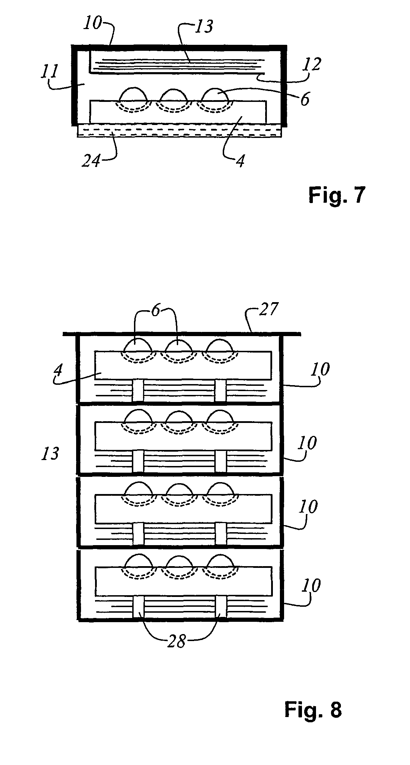

Fig. 6 zeigt eine schematische Darstellung der erfindungsgemäßen Trägerplatte 1, die sich durch die Transportvorrichtung 20 (siehe Fig. 5), annähernd in Kontakt mit einem Objektträger 4 befindet. Auf der Unterseite 1b besitzt die Trägerplatte 1 markierte Positionen 2a, an denen in erhöhter Position Metallnetzchen 2 mit Gewebedünnschnitten 2b positioniert sind. An der Oberseite 1 a der Trägerplatte 1 befinden sich entgegengesetzt zu den Positionen der Metallnetzchen 2 Bohrungen 3a, in denen Magnete 3 stecken, um die Metallnetzchen 2 auf der Unterseite 1b der Trägerplatte 1 durch magnetische Kraft auf ihrem Platz zu halten.

Bei einem bestimmten geringen Abstand zwischen der Unterseite 1b der Trägerplatte 1 und der Oberseite 4a des Objektträgers 4 benetzen die Flüssigkeitstropfen 6 die Gewebedünnschnitte 2b auf den Metallnetzchen 2. Der Abstand ist dabei vom Volumen des Flüssigkeitstropfen 6 abhängig und variiert von 0,5 mm bis 4 mm. Der Transport der Trägerplatte 1 und des Objektträgers 4 wird mit einer Linearführung mit Schrittmotorantrieb (nicht dargestellt) durchgeführt. Die Positionen des Objektträgers 4 und der Trägerplatte 1 werden mit Positionssensoren 7 überwacht und entsprechend gesteuert. Zur Steuerung werden die Signale der verschiedenen Positionssensoren 7 verwendet. In der hier dargestellten Ausführungsform sind parallel angeordnete, vertikale Führungsschienen 8 vorgesehen, über die der Haltekopf 23 (siehe Fig. 5) zusammen mit der in einer Halterung 9 eingespannten Trägerplatte 1 auf den Objektträger 4 abgesenkt werden kann. Die Halterung 30 fixiert die Trägerplatte 1 und jeweils einen Objektträger 4 zueinander in einer Behandlungsposition 14 (siehe Fig. 5). Dabei sind die Metallnetzchen 2, die einen Gewebedünnschnitt 2b tragen, in Kontakt mit den Flüssigkeitstropfen 6 auf der Oberseite 4a des Objektträgers 4. Nach Ablauf einer eingestellten Inkubationszeit wird automatisch der Wechsel der Trägerplatte 1 zum nächsten Arrangement von Flüssigkeitstropfen 6 auf demselben Objektträger 4 oder einem nächsten Objektträger 4 bewirkt. Die Trägerplatte 1 wird dazu automatisch angehoben und der Objektträger 4 um eine Stellung weiter transportiert. Dabei ist in Fig. 6 mit dem Pfeil A die vertikale Transportrichtung der Trägerplatte 1 und mit dem Pfeil B die horizontale Transportrichtung des Objektträgers 4 gekennzeichnet.

Der Ablauf des Transports der Objektträger 4 ist im weiteren nicht detailliert beschrieben und kann auf verschiedene Weise realisiert werden. Dem Fachmann sind beispielsweise folgende Anordnungen bekannt: Die Objektträger 4 sind auf einer linearen Fördereinrichtung 24 aufgelegt, die durch eine Motor 26 bewegt wird. Alternativ befinden sich die Objektträger 4 auf einer kreisförmigen Fördereinrichtung 24 gelegt, die ebenfalls mit einem Motor angetrieben wird.

Um eine Volumenreduktion der Flüssigkeitstropfen 6 durch Verdampfen zu vermeiden sind die Objektträger 4 auf der Fördereinrichtung 24 mit einer Abdeckung 10 versehen, so dass dadurch eine Kammer 11 entsteht. In dieser Kammer 11 wird z.B. durch eingelegtes feuchtes Filterpapier 13 auf einer Halterung 12 eine hohe Luftfeuchtigkeit erreicht und die Verdampfung der Flüssigkeitstropfen 6 gering gehalten.

Fig. 7 zeigt in eine schematische Darstellung der Kammer 11 als Verdunstungsschutz der Flüssigkeitstropfen 6 auf dem Objektträger 4. In der Kammer befindet sich auf einer Halterung 12 ein Stapel feuchtes Fließpapier 13. Vor dem Kontakt der Flüssigkeitstropfen 6 mit den Metallnetzchen 2 wird die Abdeckung 10 automatisch zumindest teilweise geöffnet.

Fig. 8 zeigt eine schematische Darstellung einer anderen Ausführungsform der Kammer 10 als Verdunstungsschutz der Flüssigkeitstropfen 6 auf den Objektträgern 4. Die Kammer 4 als Verdunstungsschutz sieht in einer anderen Ausführungsform z.B. derart aus, dass sich das feuchte Filterpapier 13 in der Kammer 10 unterhalb des Objektträgers 4 befindet. Bei dieser Ausführungsform sind mehrere Kammern 10 übereinander gestapelt. Dabei ist die nächste Kammer auf der darunter liegenden Kammer platziert und schließt somit diese ab. Die Feuchtigkeit des Filterpapiers 13 dringt von unten seitlich am Objektträger 4 vorbei in die Kammer 10. Der Objektträger 4 steht sozusagen auf Stelzen 28 im Sumpf. Die oberste Kammer 10 ist schließlich mit einem Deckel 27 abgeschlossen. Die Objektträger 4 werden in geeigneter Weise zu der Behandlungsposition 14 transportiert. In der Behandlungsposition wird die Trägerplatte 1 mit dem Objektträger in Kontakt gebracht.

Die erfindungsgemäße Vorrichtung ist so angepasst, dass sie folgende Schritte eines bereits bestehenden Standardprotokolls zur immunologischen Markierung von Gewebedünnschnitten automatisch ausführt: Absättigen unspezifischer Bindungen, Antikörper-Inkubation, diverse Waschschritte mit verschiedenen Waschlösungen.

In einer weiteren Ausführungsform ist an der Behandlungsposition die Anbringung einer Wärmequelle beispielsweise in Form einer kleinen elektrischen Widerstandsheizvorrichtung oder einer Kühleinheit vorgesehen, um die optimale Reaktionstemperatur des Objektträgers 4 und der Flüssigkeitstropfen 6 einzustellen. Diese ist so ausgebildet, dass ein elektrischer Kontakt des Objektträgers die Heiz- bzw. Kühlvorrichtung dieses Objektträgers auslöst. Die Steuerung der Wärmequelle bzw. der Kühleinheit erfolgt per Temperaturfühler am Objektträger 4 oder in der Nähe des Flüssigkeitstropfens und wird durch die angeschlossene Computereinheit 25 und ein entsprechendes Computerprogramm reguliert. Die Erwärmung oder Kühlung der Objektträger 4 kann auch durch Kontakt der Objektträger 4 mit einer temperaturgeregelten, metallischen Platte 31 erfolgen.

Gegenstand der Erfindung ist darüber hinaus ein Verfahren, mit dem unter Nutzung der beschriebenen Vorrichtung mehrere Metallnetzchen 2 mit darauf befindlichen Gewebedünnschnitten 2b auf einer Trägerplatte 1 zur Behandlung, im besonderen zur Durchführung von immunologischen Markierungen und/oder Waschschritten in reproduzierbarer Qualität gleichzeitig effektiv und zeitsparend bearbeitet werden. Der automatisierte Arbeitsablauf reduziert die Fehlerquelle "Mensch".

Das Verfahren optimiert die Behandlung, im besonderen die Durchführung von immunologischen Markierungen und /oder Waschschritten von Gewebedünnschnitten für elektronenmikroskopische Proben, die einzelnen Protokolle bezüglich Art der Flüssigkeit und Inkubationszeit sind dabei dem Stand der Technik zu entnehmen.

Anstelle die Metallnetzchen 2 mit einer Pinzette von einem Flüssigkeitstropfen 6 zum nächsten zu transportieren, werden die Gewebedünnschnitte 2b auf Metallnetzchen 2 positioniert und auf die erfindungsgemäße Trägerplatte 1, die markierte und erhöhte Positionen 2a aufweist und die auf der Unterseite 1 b vorteilhafterweise hydrophob beschichtet ist, platziert. Die an der Oberseite 1 a der Trägerplatte 1 befindlichen Magnete 3 halten die Metallnetzchen 2 durch magnetische Kraft auf ihrem Platz Fig. 6).

Die Trägerplatte 1 wird mittels einer Transportvorrichtung 20 mit steuerbarer Hebe- und Senkfunktion (siehe Fig. 5) gehaltert und auf die jeweiligen Objektträger 4 abgesenkt.

Mit einer Mikroliterpipette werden Flüssigkeitstropfen 6 exakten Volumens in die Vertiefungen 5 des erfindungsgemäßen Objektträgers 4, eingefüllt. Die Positionen der Flüssigkeitstropfen 6 am Objektträger 4 liegen in der Behandlungsposition 14 den Positionen der Metallnetzchen 2 auf der Trägerplatte 1 genau gegenüber (siehe Fig. 6).

Der Objektträger 4 ist auf der Fördereinrichtung 24 der Transportvorrichtung 20 aufgelegt. Die Einstellung einer bestimmten Temperatur des Objektträgers 4 und der Flüssigkeitstropfen 6 wird per Computereinheit 25 durch eine Wärmequelle bzw. eine Kühleinheit (nicht dargestellt) die durch elektrischen Kontakt des Objektträgers ausgelöst werden gesteuert.

Die Transportvorrichtung 20 und die Fördereinrichtung 24 arbeiten derart zusammen, dass die Trägerplatte 1 mit den Metallnetzchen 2 parallel und seitlich bezüglich dem Objektträger 4 zentriert ist. Dabei stimmen die Positionen der Metallnetzchen 2 und die der Flüssigkeitstropfen 6 exakt gegenüberliegend überein. Die Abdeckung 10, die die Flüssigkeitstropfen 6 in einer Kammer 11 mit feuchtem Fließpapier 13 vor Verdunstung und dadurch bedingter Volumenreduktion schützt, wird automatisch zumindest teilweise geöffnet. Bei einem bestimmten geringen Abstand zwischen der Trägerplatte 1 und dem Objektträger 4 benetzen die Flüssigkeitstropfen 6 die Metallnetzchen 2. Diese Position wird nun für die jeweils programmierte Inkubationszeit konstant gehalten. Der Abstand ist vom Tropfenvolumen abhängig und variiert von 0,5 mm bis 4 mm. Die motorbetriebene Transportmechanik der Fördereinrichtung 24 und die Transportvorrichtung 20 werden per Computereinheit 25, Computerprogramm und Positionssensoren 7 gesteuert.

Nach Ende der eingestellten Inkubationszeit erfolgt automatisch der Wechsel der Trägerplatte 1 zum nächsten Flüssigkeitstropfen 6. Die Trägerplatte 1 wird automatisch mit der Transportvorrichtung 20 und Sensorsteuerung 7 angehoben und der Objektträger 4 automatisch um eine Position weitertransportiert oder ein nächster Objektträger 4 mit Flüssigkeitstropfen 6 automatisch aus einer Linearführung mit mehreren Objektträgern einem Karussell, einer Kassette oder einem Stapel eingeführt.

Mit diesem Verfahren werden folgende Schritte eines Standardprotokolls zur immunologischen Markierung von Gewebedünnschnitten aus dem Stand der Technik mit mehreren Metallnetzchen 2 und darauf befindlichen Gewebedünnschnitten 2b gleichzeitig automatisch und reproduzierbar ausführt: Absättigen unspezifischer Bindungen, Antikörper-Inkubation, diverse Waschschritte mit verschiedenen Waschlösungen.

Die Erfindung wurde in Bezug auf eine besondere Ausführungsform beschrieben. Es ist einem Fachmann jedoch klar daß Abwandlungen und Modifikationen durchgeführt werden können, ohne den Schutzbereich der Ansprüche zu verlassen.

### Bezugszeichenliste

- 1: Trägerplatte
- 1a: Oberseite der Trägerplatte
- 1b: Unterseite der Trägerplatte
- 2: Metallnetzchen
- 2a: markierte Positionen auf der Trägerplatte
- 2b: Gewebedünnschnitte
- 3: Magnete
- 3a: Bohrungen für Magnete
- 4: Objektträger
- 4a: Oberseite des Objektträgers
- 4b: Unterseite des Objektträgers
- 4c: Kennzeichnung am Objektträger
- 5: Vertiefungen ("wells")
- 5a: Teflonbeschichtung
- 6: Flüssigkeitstropfen
- 7: Positionssensoren
- 8: vertikale Führungsschiene der Transportvorrichtung
- 9: Halterung für Trägerplatte
- 10: Abdeckung des Objektträgers
- 11: Kammer
- 12: Halterung für Fließpapier
- 13: Stapel feuchtes Fließpapier
- 14: Behandlungsposition
- 20: Transportvorrichtung
- 21: Motor der Transportvorrichtung
- 22: Führungsschiene der Transporteinrichtung
- 23: Haltekopf
- 24: Fördereinrichtung
- 25: Computereinheit
- 26: Motor der Fördereinrichtung
- 27: Deckel
- 28: Stelze
- 29: gestrichelt-gepunktete Linie
- 30: Halterung der Transporteinrichtung
- 31: temperaturgeregelte Platte
- 32: gestrichelte Linie
- A: Pfeil vertikale Transportrichtung
- B: Pfeil horizontale Transportrichtung
- D: Dicke

## Patentansprüche

1. Vorrichtung, bestehend im wesentlichen aus einer Trägerplatte (1) und einem Objektträger (4), zur Behandlung von Gewebedünnschnitten (6) auf der Trägerplatte (1) mit mindestens einer Behandlungsflüssigkeit, wobei der Trägerplatte gegenüberliegend ein Objektträger (4) in einer Behandlungsposition (14) angeordnet ist, und wobei der Objektträger (4) Vertiefungen (5) enthält, die mit mindestens einer Flüssigkeit gefüllt werden können,
**dadurch gekennzeichnet, dass** die Trägerplatte (1) auf der Unterseite (1b) markierte Positionen besitzt, an denen Metallnetzchen (2) mit Gewebedünnschnitten positioniert sind, dass sich an der Oberseite (1a) der Trägerplatte (1) Bohrungen (3a) befinden, in denen Magnete stecken, welche bewirken, dass die Metallnetzchen (2) durch magnetische Kraft auf ihrem Platz gehalten werden, wobei die Bohrungen (3a) für die Magnete den markierten Positionen (2a) gegenüberliegen, und dass die Positionen der Vertiefungen (5) des Objektträgers in ihrer Anordnung den Positionen der Metallnetzchen (2) auf der Trägerplatte entsprechen.

2. Vorrichtung gemäß Anspruch 1, **dadurch gekennzeichnet dass**, die Positionen (2a) für Metallnetzchen (2) auf der Unterseite (1b) der Trägerplatte (1) als Erhöhung ausgebildet sind.

3. Vorrichtung gemäß Anspruch 1, **dadurch gekennzeichnet dass**, die Trägerplatte (1) aus formstabilem Material, vorzugsweise aus Aluminium, Messing, faserverstärkten Kunststoffen, besteht.

4. Vorrichtung gemäß Anspruch 1, **dadurch gekennzeichnet dass**, die Trägerplatte (1) auf der Unterseite (1b), die die Metallnetzchen (2) trägt, hydrophob beschichtet ist.

5. Vorrichtung gemäß Anspruch 1, **dadurch gekennzeichnet dass**, die Trägerplatte (1) über eine Halterung (9) am Haltekopf (23) an einer Transporteinrichtung (20) mit motorbetriebener Hebe- und Senk-Funktion angebracht ist.

6. Vorrichtung gemäß Anspruch 1, **dadurch gekennzeichnet dass** der Objektträger (4) eine Oberseite (4a) definiert, die Vertiefungen (5) enthält, die zur Aufnahme von Behandlungsflüssigkeit (6) ausgebildet sind.

7. Vorrichtung gemäß Anspruch 1, **dadurch gekennzeichnet dass,** der Objektträger (4) auf der Oberseite (4a), die die Vertiefungen (5) enthält hydrophob beschichtet ist.

8. Vorrichtung gemäß Anspruch 7, **dadurch gekennzeichnet dass**, das Flüssigkeitsvolumen der Vertiefungen (5) des Objektträgers (4) 50 µl vorzugsweise 5 µl beträgt.

9. Verfahren zur Behandlung von Gewebedünnschnitten auf einer Trägerplatte (1) mit mindestens einer Behandlungsflüssigkeit, wobei an der Unterseite (1b) der Trägerplatte (1) an markierten Positionen (2a) Metallnetzchen (2) mit Gewebedünnschnitten (2b) positioniert sind, die Bohrungen (3a) an der Oberseite (1a) der Trägerplatte (1) gegenüberliegen,
mit den folgenden Schritten:
Befüllen mindestens eines Objektträgers (4), auf dem sich Vertiefungen (5) befinden, mit einer Behandlungsflüssigkeit (6);
Verbringen des Objektträgers (4) in eine Behandlungsposition (14) ;
Absenken der Trägerplatte (1) auf den Objektträger (4), wobei ein Kontakt zwischen der Behandlungsflüssigkeit (6) und den Gewebedünnschnitten (2b) auf den Metallnetzchen (2) hergestellt wird;
und automatisches Wechseln der Objektträger (4) zu einer nächsten Behandlungsposition.

10. Verfahren gemäß Anspruch 9 **gekennzeichnet dadurch dass** die Behandlung der Gewebedünnschnitte (2b) immunologische Markierungsreaktionen und /oder Waschschritte darstellt.

11. Verfahren gemäß Anspruch 9 **gekennzeichnet dadurch dass** die Behandlung der Gewebedünnschnitte (2b) automatisch durchgeführt wird.

12. Verfahren gemäß Anspruch 9 **gekennzeichnet dadurch dass** sich die Gewebedünnschnitte (2b) auf Metallnetzchen (2) befinden, die auf markierten und erhöhten Positionen (2a) der Unterseite (1b) der erfindungsgemäßen Trägerplatte (1) sitzen und durch Magnete (3) an der Oberseite (1a) der Trägerplatte (1) auf ihrem Platz gehalten werden.

13. Verfahren gemäß Anspruch 9 **gekennzeichnet dadurch dass** die Trägerplatte (1) mittels einer Halterung (9) an einem Haltekopf (23) einer Transportvorrichtung (20) mit automatischer Hebe- und Senkfunktion befestigt wird.

14. Verfahren gemäß Anspruch 9 **gekennzeichnet dadurch, dass** die Transportvorrichtung (20) mit automatischer Hebe- und Senkfunktion den Objektträger (4) in eine Behandlungsposition bringt, in der die Flüssigkeitstropfen (6) in den Vertiefungen (5) auf der Oberseite (4a) des Objektträgers (4) exakt den Gewebedünnschnitten (2b) auf den Metallnetzchen (2) auf der Unterseite (1b) der Trägerplatte (1) gegenüberliegen.

15. Verfahren gemäß Anspruch 9 **gekennzeichnet dadurch dass** die Steuerung der Transportvorrichtung (20) so eingestellt ist, dass die Trägerplatte (1) an den Objektträger (4) annähert wird und die Gewebedünnschnitte (2b) auf den Metallnetzchen (2) in Kontakt mit den Flüssigkeitstropfen (6) auf dem Objektträger (4) kommen.

16. Verfahren gemäß Anspruch 9 **gekennzeichnet dadurch dass** vor dem Kontakt der Gewebedünnschnitte (2b) auf der Trägerplatte (1) mit den Flüssigkeitstropfen (6) auf dem Objektträger (4) die Abdeckung (10) der Objektträger (4) automatisch zumindest teilweise geöffnet wird.

17. Verfahren gemäß Anspruch 9 **gekennzeichnet dadurch dass** der Kontakt der Gewebedünnschnitte (2b) auf der Trägerplatte (1) mit den Flüssigkeitstropfen (6) auf dem Objektträger (4) über eine beliebige Inkubationszeit gehalten wird.

18. Verfahren gemäß Anspruch 9 **gekennzeichnet dadurch dass** nach Ablauf der Inkubationszeit die Trägerplatte (1) automatisch entlang der Führungsschienen (8) gehoben wird und der Objektträger (4) auf der Fördereinrichtung (24) über eine motorbetriebene Führungsschiene (22) automatisch in eine andere Behandlungsposition wechselt.

## Claims

1. Device, consisting essentially of a support plate (1) and an object support (4), for the treatment of thin tissue sections (6) on the support plate (1) with at least one treatment liquid, the support plate being arranged opposite an object support (4) in a treatment position (14), and the object support (4) containing wells (5) which can be filled with at least one liquid,
**characterized in that** the support plate (1) has marked positions on the lower side (1b) at which metal nets (2) with thin tissue sections can be positioned, **in that** there are bores (3a) on the upper side (1a) of the support plate (1) into which magnets are fitted which cause the metal nets (2) to be held in their place by magnetic force, the bores (3a) for the magnets lying opposite the marked positions (2a), and **in that** the positions of the wells (5) of the object support correspond in their arrangement to the position of the metal nets (2) on the support plate.

2. Device according to Claim 1, **characterized in that** the positions (2a) for metal nets (2) on the lower side (1b) of the support plate (1) are designed as an elevation.

3. Device according to Claim 1, **characterized in that** the support plate (1) consists of a shape-stable material, preferably of aluminium, brass, fibre-reinforced plastics.

4. Device according to Claim 1, **characterized in that** the support plate (1) is hydrophobically coated on the lower side (1b) which carries the metal nets (2)

5. Device according to Claim 1, **characterized in that** the support plate (1) is fitted via a frame (9) on the holding head (23) of a transport instrument (20) with a motor-driven raising and lowering function.

6. Device according to Claim 1, **characterized in that** the object support (4) defines an upper side (4a) which contains wells (5) which are designed to hold treatment liquid (6).

7. Device according to Claim 1, **characterized in that** the object support (4) is hydrophobically coated on the upper side (4a) which contains the wells (5).

8. Device according to Claim 7, **characterized in that** the liquid volume of the wells (5) of the object support (4) is 50 µl, preferably 5 µl.

9. Method for treating thin tissue sections on a support plate (1) with at least one treatment liquid, metal nets (2) with thin tissue sections (2b) being positioned on the lower side (1b) of the support plate (1) at marked positions (2a), which lie opposite bores (3a) on the upper side (1a) of the support plate (1), having the following steps:
filling at least one object support (4), on which there are wells (5), with a treatment liquid (6);
bringing the object support (4) into a treatment position (14);
lowering the support plate (1) onto the object support (4), contact being made between the treatment liquid (6) and the thin tissue sections (2b) on the metal nets (2);
and automatically moving the object support (4) to a subsequent treatment position.

10. Method according to Claim 9, **characterized in that** the treatment of the thin tissue sections (2b) represents immunological marking reactions and/or washing steps.

11. Method according to Claim 9, **characterized in that** the treatment of the thin tissue sections (2b) is carried out automatically.

12. Method according to Claim 9, **characterized in that** the thin tissue sections (2b) lie on metal nets (2) which are placed on marked and elevated positions (2a) of the lower side (1b) of the support plate (1) according to the invention and are held in their place by magnets (3) on the upper side (1a) of the support plate (1).

13. Method according to Claim 9, **characterized in that** the support plate (1) is fitted by means of a frame (9) on a holding head (23) of a transport device (20) with an automatic raising and lowering function.

14. Method according to Claim 9, **characterized in that** the transport device (20) with the automatic raising and lowering function brings the object support (4) into a treatment position in which the liquid drops (6) in the wells (5) on the upper side (4a) lie exactly opposite the thin tissue sections (2b) on the metal nets (2) on the lower side (1b) of the support plate (1).

15. Method according to Claim 9, **characterized in that** the control of the transport device (20) is set so that the support plate (1) is brought close to the object support (4) and the thin tissue sections (2b) on the metal nets (2) come in contact with the liquid drops (6) on the object support (4)

16. Method according to Claim 9, **characterized in that** the cover (10) of the object supports (4) is automatically opened at least partially before contact of the thin tissue sections (2b) on the support plate (1) with the liquid drops (6) on the object support (4).

17. Method according to Claim 9, **characterized in that** the contact of the thin tissue sections (2b) on the support plate (1) with the liquid drops (6) on the object support (4) is maintained for a desired incubation time.

18. Method according to Claim 9, **characterized in that** after the incubation time has elapsed, the support plate (1) is raised automatically along the guide rails (8) and the object support (4) on the delivery instrument (24) is moved automatically into another treatment position via a motor-driven guide rail (22).

## Revendications

1. Dispositif essentiellement constitué d'une plaque de support (1) et d'un porte-objet (4), destiné au traitement de minces coupes tissulaires (6) placées sur la plaque de support (1) à l'aide d'au moins un liquide de traitement, un porte-objet (4) étant placé en face de la plaque de support dans une position de traitement (14), le porte-objet (4) contenant des creux (5) qui peuvent être remplis d'au moins un liquide, **caractérisé en ce que** sur son côté inférieur (1b), la plaque de support (1) présente des positions repérées sur lesquelles de petits treillis métalliques (2) sont placés avec les minces coupes tissulaires, **en ce que** sur le côté supérieur (1a) de la plaque de support (1) sont ménagés des alésages (3a) dans lesquels s'enfoncent des aimants qui ont pour effet que les petits treillis métalliques (2) sont maintenus en position par une force magnétique, les alésages (3a) prévus pour les aimants étant situés en face des positions (2a) repérées et **en ce que** l'agencement des positions des creux (5) du porte-objet correspond à celui des positions des petits treillis métalliques (2) sur la plaque de support.

2. Dispositif selon la revendication 1, **caractérisé en ce que** les positions (2a) prévues pour les petits treillis métalliques (2) sur le côté inférieur (1b) de la plaque de support (1) sont configurées comme surélévations.

3. Dispositif selon la revendication 1, **caractérisé en ce que** la plaque de support (1) est constituée d'un matériau indéformable, de préférence en aluminium, en laiton ou en matière synthétique renforcée de fibres.

4. Dispositif selon la revendication 1, **caractérisé en ce que** le côté inférieur (1b) de la plaque de support (1) qui porte les petits treillis métalliques (2) est revêtue de manière à être rendue hydrophobe.

5. Dispositif selon la revendication 1, **caractérisé en ce que** la plaque de support (1) est placée sur un dispositif de transport (20) qui assure une fonction de relèvement et d'abaissement entraînés par moteur par l'intermédiaire d'un support (9) prévu sur la tête de maintien (23).

6. Dispositif selon la revendication 1, **caractérisé en ce que** le porte-objet (4) définit un côté supérieur (4a) qui contient des creux (5) qui sont configurés de manière à pouvoir reprendre le liquide de traitement (6).

7. Dispositif selon la revendication 1, **caractérisé en ce que** le côté supérieur (4a) du porte-objet (4) qui contient les creux (5) est revêtu de manière à être rendu hydrophobe.

8. Dispositif selon la revendication 7, **caractérisé en ce que** le volume de liquide des creux (5) du porte-objet (4) est de 50 µl et de préférence de 5 µl.

9. Procédé de traitement de minces coupes tissulaires sur une plaque de support (1) à l'aide d'au moins un liquide de traitement, dans lequel de petits treillis métalliques (2) sont placés avec les minces coupes tissulaires (2b) sur le côté inférieur (1b) de la plaque de support (1) en des positions (2a) repérées qui sont situées en face des alésages (3a) ménagés dans le côté supérieur (1a) de la plaque de support (1), lequel procédé comporte des étapes qui consistent à :
remplir d'un liquide de traitement (6) au moins un porte-objet (4) sur lequel sont ménagés des creux (5),
amener le porte-objet (4) dans une position de traitement (14),
abaisser la plaque de support (1) sur le porte-objet (4), ce qui établit un contact entre le liquide de traitement (6) et les minces coupes tissulaires (2b) placées sur les petits treillis métalliques (2) et
déplacer automatiquement le porte-objet (4) vers une position suivante de traitement.

10. Procédé selon la revendication 9, **caractérisé en ce que** le traitement des minces coupes tissulaires (2b) consiste en réactions de marquage immunologique et/ou en opérations de lavage.

11. Procédé selon la revendication 9, **caractérisé en ce que** le traitement des minces coupes tissulaires (2b) est réalisé automatiquement.

12. Procédé selon la revendication 9, **caractérisé en ce que** les minces coupes tissulaires (2b) sont situées sur de petits treillis métalliques (2) qui sont placés sur des positions repérées et surélevées (2a) sur le côté inférieur (1b) de la plaque de support (1) selon l'invention et sont maintenues en leur position par des aimants (3) situés sur le côté supérieur (1a) de la plaque de support (1).

13. Procédé selon la revendication 9, **caractérisé en ce que** la plaque de support (1) est fixée sur une tête de maintien (23) d'un dispositif de transport (20) doté d'une fonction de relèvement et d'abaissement automatiques au moyen d'un support (9).

14. Procédé selon la revendication 9, **caractérisé en ce que** le dispositif de transport (20) doté d'une fonction de relèvement et d'abaissement automatiques amène le porte-objet (4) dans une position de traitement dans laquelle les gouttes de liquide (6) présentes dans les creux (5) du côté supérieur (4a) du porte-objet (4) sont situées exactement en face des minces coupes tissulaires (2b) placées sur les petites grilles métalliques (2) du côté inférieur (1b) de la plaque de support (1).

15. Procédé selon la revendication 9, **caractérisé en ce que** la commande du dispositif de transport (20) est réalisée de telle sorte que la plaque de support (1) est approchée du porte-objet (4) et **en ce que** les minces coupes tissulaires (2b) placées sur les petits treillis métalliques (2) entrent en contact avec les gouttes de liquides (6) placées sur le porte-objet (4).

16. Procédé selon la revendication 9, **caractérisé en ce qu'**avant que les minces coupes tissulaires (2b) placées sur la plaque de support (1) entrent en contact avec les gouttes de liquide (6) déposées sur le porte-objet (4), le recouvrement (10) du porte-objet (4) est ouvert automatiquement, au moins en partie.

17. Procédé selon la revendication 9, **caractérisé en ce que** le contact entre les minces coupes tissulaires (2b) placées sur la plaque de support (1) avec les gouttes de liquide (6) placées sur le porte-objet (4) est maintenu pendant une durée d'incubation quelconque.

18. Procédé selon la revendication 9, **caractérisé en ce qu'**après l'écoulement de la durée d'incubation, la plaque de support (1) est relevée automatiquement le long des rails de guidage (8) et **en ce que** le porte-objet (4) placé sur le dispositif de transport (24) passe automatiquement dans une autre position de traitement grâce à un rail de guidage (22) entraîné par moteur.
